# EUROPÄISCHE PATENTSCHRIFT

(11) **EP 4 438 506 B1**
(45) Veröffentlichungstag und Bekanntmachung des Hinweises auf die Patenterteilung: **31.12.2025**
(21) Anmeldenummer: 24165965.5
(22) Anmeldetag: 25.03.2024
(51) Int. Cl.: B65B 57/00, F16P 1/02, F16P 3/08

(54) **VERPACKUNGSMASCHINE ZUM VERARBEITEN VON VERPACKUNGSMATERIAL**
PACKAGING MACHINE FOR PROCESSING PACKAGING MATERIAL
MACHINE D'EMBALLAGE POUR TRAITER UN MATÉRIAU D'EMBALLAGE

(30) Priorität: 29.03.2023 DE 102023107938
(43) Veröffentlichungstag der Anmeldung: 02.10.2024
(73) Patentinhaber: MULTIVAC Sepp Haggenmüller SE & Co. KG, 87787 Wolfertschwenden (DE)
(72) Erfinder: Schneider, Anna Lena, 87496 Dietmannsried (DE)
(74) Vertreter: Grünecker Patent- und Rechtsanwälte PartG mbB

(56) Entgegenhaltungen:
- DE-A1- 102017 128 363
- DE-A1- 102019 214 962

## Beschreibung

Die vorliegende Erfindung betrifft eine Verpackungsmaschine zum Verarbeiten von Verpackungsmaterial gemäß Anspruch 1 und ein Verfahren zum Verarbeiten von Verpackungsmaterial mit einer Verpackungsmaschine gemäß Anspruch 14.

### Stand der Technik

Verpackungsmaschinen zum Verarbeiten von Verpackungsmaterial sind aus dem Stand der Technik hinreichend bekannt. Diese Maschinen können Rohmaterial, wie bspw. eine Folienbahn zu Verpackungen ausformen, oder bereits hergestellte Verpackungen oder Teile davon weiterverarbeiten, sie beispielsweise befüllen und verschließen. Hierzu umfassen die Verpackungsmaschinen üblicherweise einen Arbeitsraum, in dem einer oder mehrere Arbeitsschritte an dem Verpackungsmaterial ausgeführt werden. Dabei werden bewegliche Komponenten der Verpackungsmaschine genutzt, wie bspw. relativ zueinander bewegbare Oberwerkzeuge und Unterwerkzeuge im Falle einer Siegelmaschine.

Die Verpackungsmaschinen umfassen weiterhin einen Durchlass für Verpackungsmaterial, der entweder als Einlass oder Auslass für das Verpackungsmaterial zum bzw. aus dem Arbeitsraum ausgestaltet sein kann. Diese Durchlässe stellen Öffnungen in den Arbeitsraum hinein dar, was für Bediener ein Verletzungsrisiko bedeutet.

Aus dem Stand der Technik, insbesondere der DE 10 2017 128 363 A1 sind Schutzabdeckungen bekannt, mit denen ein Eingriff eines Bedieners in den Arbeitsraum der Arbeitsmaschine verhindert werden kann. Da die Schutzabdeckungen zum vollständigen Verhindern eines Eingriffs eines Bedieners in Transportrichtung des Verpackungsmaterials eine erhebliche Länge aufweisen müssen (bspw. 50cm und mehr), sind diese Schutzabdeckungen vergleichsweise schwer. Da gleichzeitig wünschenswert ist, dass den Schutzabdeckungen zugeordnete Schutzschalter bei einem möglichst geringen Bewegen der Schutzabdeckung aus der Schutzposition heraus selbst bei kleinem Kraftaufwand reagieren und ein Anheben der Schutzabdeckung signalisieren, um den Betrieb der Maschine zu stoppen, müssen gegensätzliche Anforderungen erfüllt werden, was die Ausgestaltung der Schutzabdeckung und der zugehörigen Schutzschalter verkompliziert.

Auch Dokument DE 2019 214962 A1 ist bekannt, dass eine Verpackungsmaschine zum Verarbeiten von Verpackungsmaterial offenbart, die Verpackungsmaschine umfassend einen Arbeitsbereich, einen Durchlass für Verpackungsmaterial und eine Schutzeinrichtung, die im Bereich des Durchlasses so angeordnet ist, dass ein Eingreifen in den Arbeitsbereich durch den Durchlass verhindert wird, wobei die Schutzeinrichtung ein erstes Schutzelement, einen dem ersten Schutzelement zugeordneten ersten Schutzschalter, umfasst.

### Aufgabe

Ausgehend vom bekannten Stand der Technik besteht die zu lösende technische Aufgabe somit darin, eine Schutzabdeckung anzugeben, die zuverlässig den Arbeitsraum der Verpackungsmaschine vor einem Eingriff eines Bedieners schützt und gleichzeitig ein Aktivieren der Schutzschalter bei geringfügigem Anheben der Schutzabdeckung mit nur geringem Kraftaufwand ermöglicht.

### Lösung

Diese Aufgabe wird erfindungsgemäß durch die Verpackungsmaschine zum Verarbeiten von Verpackungsmaterial gemäß Anspruch 1 sowie das Verfahren zum Verarbeiten von Verpackungsmaterial gemäß Anspruch 14 gelöst. Vorteilhafte Weiterbildungen der Erfindung sind in den Unteransprüchen erfasst.

Die erfindungsgemäße Verpackungsmaschine zum Verarbeiten von Verpackungsmaterial umfasst einen Arbeitsbereich, einen Durchlass für Verpackungsmaterial und eine Schutzeinrichtung, die im Bereich des Durchlasses so angeordnet ist, dass ein Eingreifen in den Arbeitsbereich durch den Durchlass verhindert wird, wobei die Schutzeinrichtung ein erstes Schutzelement, einen dem ersten Schutzelement zugeordneten ersten Schutzschalter, ein zweites Schutzelement und einen dem zweiten Schutzelement zugeordneten zweiten Schutzschalter umfasst, wobei das zweite Schutzelement in einer Transportrichtung von Verpackungsmaterial eine zweite Länge aufweist, die kleiner als eine erste Länge des ersten Schutzelements in der Transportrichtung ist, und wobei das erste Schutzelement und das zweite Schutzelement miteinander verbunden sind und um eine Drehachse, die in einer Ebene senkrecht zur Transportrichtung und in einer Ebene parallel zu einer Transportebene verläuft, relativ zueinander drehbar angeordnet sind.

Das erste und das zweite Schutzelement können als Abdeckungen ausgeführt sein, die zwar einen Raum offenlassen, durch den Verpackungsmaterial dem Arbeitsbereich durch den Durchlass zugeführt werden kann, aber einen Eingriff des Bedieners verhindern. Die Schutzschalter sind erfindungsgemäß so ausgestaltet, dass sie zumindest ein Bewegen des ersten Schutzelements bzw. des zweiten Schutzelements aus einer Schutzposition, in der ein Eingreifen eines Bedieners in den Arbeitsraum verhindert wird, signalisieren können.

Durch die zweiteilige Ausgestaltung der Schutzelemente und die kürzere Ausgestaltung des zweiten Schutzelements, das ein Bediener bei dem Versuch, in den Arbeitsraum einzugreifen, bevorzugt zuerst anheben muss, wird zuverlässig der Arbeitsraum vor dem Eingriff eines Bedieners abgeschirmt und gleichzeitig die Kraft verringert, die notwendig ist, um ein Anheben des Schutzelements zu bewirken. Hiermit kann auch das Verletzungsrisiko eines Bedieners, der zumindest teilweise in das erste und/oder zweite Schutzelement eingreift, reduziert werden.

Es kann vorgesehen sein, dass der Durchlass ein Einlass für Verpackungsmaterial ist, durch den Verpackungsmaterial dem Arbeitsbereich zugeführt werden kann, und wobei das zweite Schutzelement stromauf des ersten Schutzelements angeordnet ist. Ferner kann alternativ oder zusätzlich vorgesehen sein, dass der Durchlass ein Auslass für Verpackungsmaterial ist, durch den Verpackungsmaterial aus dem Arbeitsbereich abgeführt werden kann, und wobei das zweite Schutzelement stromab des ersten Schutzelements angeordnet ist.

Mit dieser Ausführungsform wird gewährleistet, dass stets das kürzere und damit bevorzugt auch leichtere Schutzelement vom Bediener zunächst angehoben werden muss, um in den Durchlass einzugreifen, unabhängig davon, ob der Durchlass ein Einlass oder Auslass ist. Die notwendige vom Bediener aufzubringende Kraft, um das zweite Schutzelement anzuheben und damit auch die von dem zweiten Schutzelement aufgrund seiner Gewichtskraft auf den Bediener einwirkende Kraft ist damit gering, was das Verletzungsrisiko des Bedieners reduziert.

In einer Ausführungsform ist vorgesehen, dass der erste Schutzschalter mit einer ersten Seite des ersten Schutzelements wirkverbunden ist und dass der zweite Schutzschalter mit einer zweiten Seite des zweiten Schutzelements wirkverbunden ist, wobei die erste Seite und die zweite Seite einander gegenüberliegen. Gesehen in Transportrichtung kann bspw. der erste Schutzschalter links und der zweite Schutzschalter rechts von der Transportrichtung angeordnet sein oder andersherum. Die Anzahl aufwendiger und damit teurer Schutzschalter zum zuverlässigen Erkennen eines Bewegens der Schutzeinrichtung aus ihrer Schutzposition heraus wird so trotz mehrteiliger Ausgestaltung der Schutzeinrichtung geringgehalten.

Der erste Schutzschalter und/oder der zweite Schutzschalter kann als Magnetschalter ausgebildet sein. Magnetschalter können auch bei geringen Bewegungen des jeweiligen Schutzelements aus der Schutzposition heraus zuverlässig ansprechen, was die Betriebssicherheit erhöht.

Die zweite Länge kann kleiner als 50% oder kleiner als 30% oder kleiner als 25% der ersten Länge sein. Bei einer Länge des zweiten Schutzelements deutlich kleiner als der Länge des ersten Schutzelements (insbesondere unterhalb von 30% und unterhalb von 25%) ist das Gewicht des zweiten Schutzelements gegenüber dem Gewicht des ersten Schutzelements und gegenüber der Gesamtmasse der Schutzeinrichtung erheblich reduziert. Hierdurch wird das Verletzungsrisiko eines Bedieners beim Eingreifen zumindest in das erste Schutzelement reduziert und dennoch ein zuverlässiges Erkennen eines Eingreifens in die Schutzvorrichtung realisiert.

Das erste Schutzelement und das zweite Schutzelement können lösbar miteinander verbunden sein. Hiermit ist nur ein Austausch einzelner Teile der Schutzvorrichtung notwendig, falls bspw. Wartungen oder Reinigung erforderlich ist.

Es kann vorgesehen sein, dass das erste Schutzelement und das zweite Schutzelement derart miteinander verbunden sind, dass eine translatorische Bewegung des zweiten Schutzelements relativ zum ersten Schutzelement parallel zur Transportrichtung möglich ist und/oder eine translatorische Bewegung des zweiten Schutzelements relativ zum ersten Schutzelement in einer Richtung (v) senkrecht zur Transportrichtung nicht möglich ist. Verkantungen des zweiten Schutzelements relativ zum ersten Schutzelement und dadurch ein ggf. nicht zuverlässiges Abschließen des Durchlasses werden hiermit vermieden. Außerdem wird durch die Begrenzung des möglichen Bewegungsspielraums ein zuverlässiges Erkennen der Bewegung des ersten Schutzelements und/oder des zweiten Schutzelements aus der Schutzposition heraus realisiert.

Es kann vorgesehen sein, dass die Masse des zweiten Schutzelements kleiner ist als die Masse des ersten Schutzelements. Die auf einen Bediener wirkenden Kräfte beim Anheben des zweiten Schutzelements sind somit vergleichsweise gering, was das Verletzungsrisiko reduziert.

In einer Ausführungsform kann das zweite Schutzelement relativ zu dem ersten Schutzelement um einen Drehwinkel aus einer Schutzposition heraus um die Drehachse gedreht werden, der größer ist als ein Grenzwinkel, bei dessen Überschreiten der zweite Schutzschalter eine Bewegung des zweiten Schutzelements aus der Schutzposition signalisiert. Mit dieser Ausführungsform wird zum einen ein Erkennen der Bewegung des zweiten Schutzelements aus der Schutzposition heraus zuverlässig ermöglicht und zum anderen das Verletzungsrisiko eines Bedieners durch eine grundsätzlich flexiblere Bewegung des zweiten Schutzelements vermindert.

Die Verpackungsmaschine kann eine Siegelmaschine sein oder eine Siegelmaschine umfassen. Siegelmaschinen umfassen üblicherweise relativ zueinander bewegliche Ober- und Unterwerkzeuge, die einen erheblichen Druck auf das zwischen ihnen angeordnete Verpackungsmaterial und damit ein großes potentielles Verletzungsrisiko für einen in den Arbeitsraum eingreifenden Bediener bewirken. Die erfindungsgemäße Schutzvorrichtung kann mit einer Siegelmaschine besonders vorteilhaft zum Erhöhen der Betriebssicherheit eingesetzt werden.

Es kann vorgesehen sein, dass das erste Schutzelement und/oder das zweite Schutzelement einen Griff umfasst, mit dem das erste Schutzelement und/oder das zweite Schutzelement in einer Richtung senkrecht zu einer Transportebene angehoben werden kann. Mit dieser Ausgestaltung kann eine Wartung oder Austausch der Schutzvorrichtung einfach realisiert werden.

Das erste Schutzelement und das zweite Schutzelement können so miteinander verbunden sein, dass sie nur gemeinsam angehoben werden können. Mit dieser Ausführungsform wird verhindert, dass während des Betriebs der Verpackungsmaschine der Durchlass nur teilweise bspw. nur durch das erste oder zweite Schutzelement geschützt ist. In diesem Zusammenhang kann vorgesehen sein, dass eine Erkennungseinrichtung vorgesehen ist, die erkennt, ob überhaupt eine Schutzvorrichtung vorhanden ist, und die den Betrieb der Vorrichtung blockiert, wenn keine Schutzvorrichtung vorhanden ist bzw. erkannt wird. Zusammen mit dem nicht-trennbaren Entfernen des ersten Schutzelements und des zweiten Schutzelements wird dann sichergestellt, dass immer die vollständige Schutzvorrichtung im Bereich des Durchlasses positioniert ist, wenn die Verpackungsmaschine im Betrieb ist. Das Verletzungsrisiko eines Bedieners wird hiermit reduziert.

Ein Drehen des zweiten Schutzelements aus einer Schutzposition um die Drehachse kann eine Kraft von höchstens 50N erfordern.

Die in dieser Ausführungsform für das Drehen nötige Kraft ist gleichzeitig die Kraft, die auf einen Bediener wirkt, der in den Durchlass und insbesondere das zweite Schutzelement eingreift. Da diese Kraft vergleichsweise gering ist, besteht selbst in diesem Fall nur ein geringes Verletzungsrisiko durch das Aufliegen des zweiten Schutzelements bspw. auf der Hand eines Bedieners während dennoch ein zuverlässiger Schutz gegen das Eingreifen des Bedieners in den Arbeitsraum gewährleistet ist.

Erfindungsgemäß ist ein Verfahren zum Verarbeiten von Verpackungsmaterial mit einer Verpackungsmaschine gemäß einer der vorangegangenen Ausführungsformen vorgesehen, das Verfahren umfassend ein Verarbeiten von Verpackungsmaterial mit der Verpackungsmaschine, wenn der erste Schutzschalter und der zweite Schutzschalter signalisieren, dass das erste Schutzelement und das zweite Schutzelement in eine Schutzposition verbracht sind, und ein Blockieren der Verarbeitung von Verpackungsmaterial, wenn der erste Schutzschalter und/oder der zweite Schutzschalter signalisiert, dass das erste Schutzelement und/oder das zweite Schutzelement nicht in die Schutzposition verbracht sind. Mit diesem Verfahren wird die Betriebssicherheit gewährleistet.

Sämtliche der hier beschriebenen Ausführungsformen können miteinander kombiniert werden.

### Kurze Beschreibung der Figuren

- Fig. 1: zeigt eine Verpackungsmaschine zum Verarbeiten von Verpackungsmaterial gemäß einer Ausführungsform.
- Fig. 2: zeigt eine Ausführungsform einer Schutzeinrichtung.
- Fig. 3 bis 6: zeigen verschiedene Ausführungsformen von Schutzeinrichtungen.

### Ausführliche Beschreibung

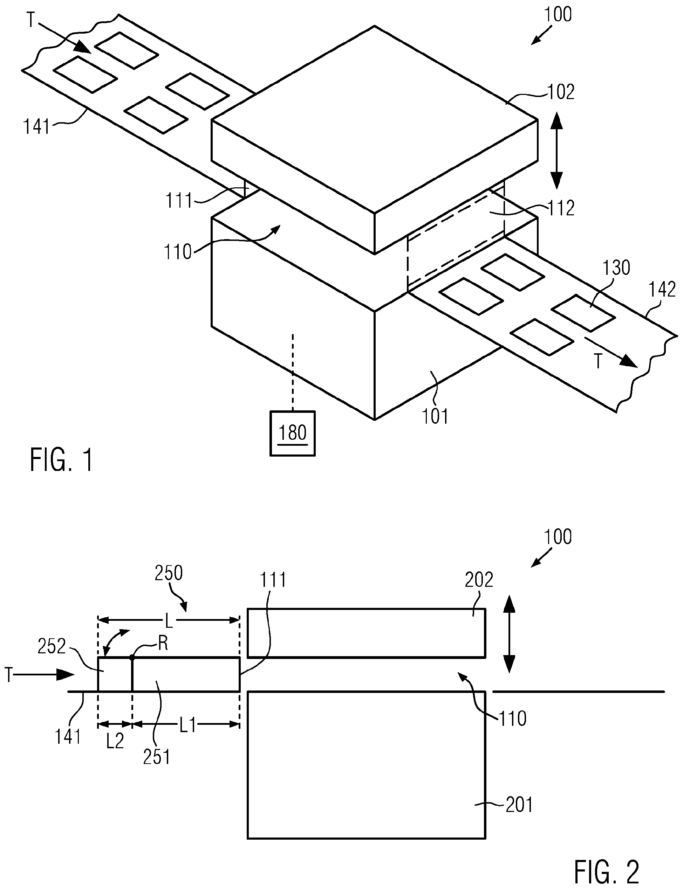

Figur 1 zeigt eine Verpackungsmaschine 100 zum Verarbeiten von Verpackungsmaterial 130 in einer Ausführungsform. Die Verpackungsmaschine ist in der hier gezeigten Ausführungsform schematisch als Siegelstation dargestellt. Diese Ausführung ist jedoch nicht zwingend und die Verpackungsmaschine ist erfindungsgemäß nicht auf Siegelmaschinen beschränkt. Allgemein ist unter dem Begriff der Verpackungsmaschine 100 jede Maschine zu verstehen, die Verpackungsmaterial 130, wie etwa Kunststoff, verarbeiten kann. Hierzu zählen bspw. Tiefziehverpackungsmaschinen, die aus einer Folienbahn Verpackungsmulden herstellen, Siegelmaschinen, die die befüllten Verpackungsmulden mit einer Siegelfolie versiegeln können, sowie Füllmaschinen, die in gefertigte Verpackungsmulden Produkt eingeben können. Auch diese beispielhaften Ausführungsformen sind nicht beschränkend zu verstehen.

Die Verpackungsmaschine 100 umfasst einen Arbeitsbereich 110. In diesem Arbeitsbereich erfolgt zumindest ein Verarbeitungsschritt des Verpackungsmaterials 130. Es kann, muss jedoch nicht vorgesehen sein, dass in dem Arbeitsbereich 110 bewegliche Komponenten der Verpackungsmaschine angeordnet sind. Bspw. kann die Verpackungsmaschine ein Unterwerkzeug 101 und ein Oberwerkzeug 102 in bekannter Art umfassen, die relativ zueinander beweglich angeordnet sind, um den Verarbeitungsschritt zu realisieren.

Die Verpackungsmaschine 100 umfasst ferner wenigstens einen Durchlass 111 und 112, durch welchen Verpackungsmaterial entweder dem Arbeitsbereich 110 zugeführt werden kann oder aus diesem abgeführt werden kann. Zu diesem Zweck kann eine stromauf der Verpackungsmaschine 100 angeordnete Transporteinrichtung 141 (bspw. ein Förderband) und eine in Transportrichtung T stromab angeordnete Transporteinrichtung 142 (bspw. ebenfalls als Förderband ausgeführt) vorgesehen sein, die Verpackungsmaterial entlang der dargestellten Transportrichtung T bewegen können. Es kann anstelle getrennter Transporteinrichtungen 141 und 142 auch ein durchgehendes Transportsystem für eine Folienbahn mit ggf. in die Folienbahn geformten Mulden vorgesehen sein.

In der in Figur 1 dargestellten Ausführungsform ist der Durchlass 111 somit als Einlass gezeigt, durch den Verpackungsmaterial von der Transporteinrichtung 141 dem Arbeitsbereich 110 zur Verarbeitung zugeführt werden kann. Der Durchlass 112 kann als Auslass verstanden werden, durch den Verpackungsmaterial nach der Verarbeitung aus dem Arbeitsbereich 110 der Transporteinrichtung 142 zum Abfördern zugeführt werden kann.

Die Durchlässe 111 und 112 können bspw. in einer Verkleidung der Verpackungsmaschine, die den Arbeitsbereich 110 im Wesentlichen umgibt, eingearbeitet sein und Öffnungen darstellen. Form und Größe der Durchlässe ist grundsätzlich nicht beschränkt.

Weiterhin kann die Verpackungsmaschine eine Steuereinheit 180 umfassen, die ausgestaltet ist, um eine oder mehrere Funktionen der Verpackungsmaschine und/oder der Transporteinrichtungen 141 und 142 zu steuern oder zu überwachen. Hierzu kann die Steuereinheit beispielsweise als Computer mit einem oder mehreren Prozessoren sowie zugeordnetem Speicher realisiert sein.

Figur 2 zeigt am Beispiel des Durchlasses als Einlass 111 der Verpackungsmaschine 100 eine erfindungsgemäße Schutzeinrichtung 250, die so im Bereich des Durchlasses angeordnet ist, um ein Eingreifen eines Bedieners durch den Durchlass hindurch in den Arbeitsbereich 110 zu verhindern.

Die Schutzeinrichtung 250 kann insbesondere oberhalb der Transporteinrichtung 141 so angeordnet sein, dass Verpackungsmaterial durch die Schutzeinrichtung 250 hindurch in den Arbeitsbereich 110 gelangen kann, ein Eingriff eines Bedieners jedoch aufgrund der Gesamtlänge L der Schutzeinrichtung 250 in Transportrichtung T nicht möglich ist. Beispielsweise kann die Länge L wenigstens 60cm oder wenigstens 80cm betragen, sodass ein Bediener selbst bei Einführen des ganzen Arms in die Schutzeinrichtung 250 von links in der Figur 2 den Arbeitsbereich 110 nicht erreichen kann.

Erfindungsgemäß umfasst die Schutzeinrichtung 250 ein erstes Schutzelement 251 und ein zweites Schutzelement 252. In der hier gezeigten Ausführungsform der Figur 2 ist das zweite Schutzelement in Transportrichtung T stromauf des ersten Schutzelements angeordnet. Ist die Schutzeinrichtung am Auslass der Verpackungsmaschine 100 angeordnet, so kann vorgesehen sein, dass das erste Schutzelement stromauf des zweiten Schutzelements bzw. das zweite Schutzelement stromab des ersten Schutzelements angeordnet ist. Erfindungsgemäß weist das erste Schutzelement eine Länge L1 und das zweite Schutzelement eine Länge L2 in Transportrichtung T auf, wobei die Länge L2 kleiner ist als die Länge L1. Bei gleichem oder vergleichbarem Aufbau des ersten Schutzelements und des zweiten Schutzelements 251 und 252 ist dies bevorzugt gleichbedeutend damit, dass die Masse des zweiten Schutzelements 252 kleiner ist als die Masse des ersten Schutzelements 251. So kann bevorzugt die Länge L2 weniger oder höchstens 50%, bevorzugt weniger oder höchstens 30% und besonders bevorzugt weniger oder höchstens 25% der Länge L1 betragen.

Dasselbe kann für die Masse des zweiten Schutzelements relativ zur Masse des ersten Schutzelements gelten. So kann insbesondere vorgesehen sein, dass die Masse des zweiten Schutzelements weniger als 10kg, bevorzugt weniger als 6kg und besonders bevorzugt weniger als 5kg beträgt. Die Masse des zweiten Schutzelements ist grundsätzlich nicht beschränkt. Es kann jedoch vorgesehen sein, dass die Gesamtmasse der Schutzeinrichtung, die sich aus der Masse des ersten Schutzelements 251 und der Masse des zweiten Schutzelements 252 zusammensetzt, höchstens 15kg beträgt.

Erfindungsgemäß ist weiterhin vorgesehen, dass das zweite Schutzelement relativ zu dem ersten Schutzelement beweglich angeordnet ist. Dabei kann insbesondere vorgesehen sein, dass das erste Schutzelement und das zweite Schutzelement derart miteinander verbunden sind, dass sie um eine Rotationsachse bzw. Drehachse R relativ zueinander drehbar gelagert sind. Dabei kann die Drehachse R bevorzugt in einer Ebene liegen, die senkrecht zur Transportrichtung T verläuft und weiterhin in einer Ebene liegen, die parallel zu der Transportebene des Verpackungsmaterials 130 verläuft. Gesehen in einer Draufsicht auf die Verpackungsmaschine 100 bedeutet dies, dass die Drehachse R quer zur Transportrichtung T verläuft.

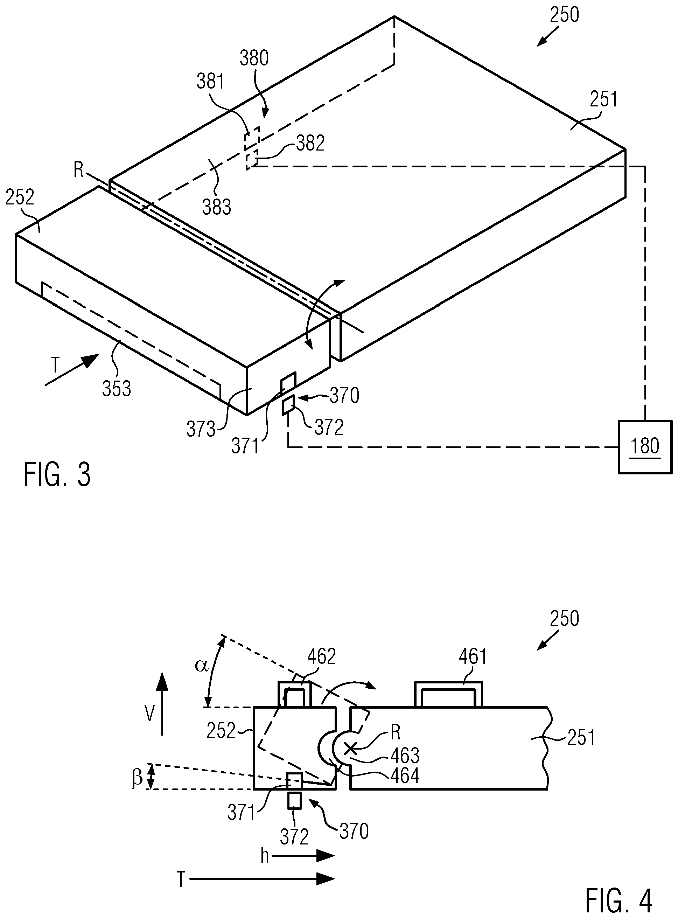

Figur 3 zeigt eine weitere Ausführungsform einer Schutzeinrichtung 250. In dieser Ausführungsform sind das erste Schutzelement 251 und das zweite Schutzelement 252 in perspektivischer Ansicht gezeigt. Lediglich schematisch ist hier ein Öffnungsbereich 353 in dem zweiten Schutzelement 252 gezeigt, durch den in Transportrichtung T Verpackungsmaterial durch die Schutzeinrichtung hindurch gefördert werden kann. Es versteht sich, dass auch das erste Schutzelement 251 einen entsprechenden Öffnungsbereich umfassen kann (hier nicht dargestellt), sodass das Verpackungsmaterial sowohl durch das erste Schutzelement als auch durch das zweite Schutzelement hindurch geführt und dem Arbeitsbereich der Verpackungsmaschine (siehe Figuren 1 und 2) zugeführt werden kann.

In der hier dargestellten Ausführungsform ist jedem der Schutzelemente 251 und 252 ein Schutzschalter zugeordnet. Der erste Schutzschalter 380 ist dem ersten Schutzelement 251 und der zweite Schutzschalter 370 dem zweiten Schutzelement 252 zugeordnet. Der erste Schutzschalter 380 und der zweite Schutzschalter 370 sind bevorzugt so ausgestaltet, dass sie ein Bewegen des ersten Schutzelements bzw. des zweiten Schutzelements aus einer Schutzposition heraus, in der das jeweilige Schutzelement einen Eingriff eines Bedieners blockieren, detektieren können.

Dazu können der erste Schutzschalter und der zweite Schutzschalter zwei Komponenten umfassen, wobei eine erste Komponente bspw. fest mit einem Rahmen der Verpackungsmaschine verbunden sein kann (die Komponenten 372 und 382) und eine zweite Komponente (die Komponenten 371 und 381) mit dem jeweiligen Schutzelement mitbewegbar verbunden sein kann.

Insbesondere können der erste Schutzschalter und der zweite Schutzschalter jeweils eine Magnetschaltung realisieren, wobei die zweite Komponente 381 bzw. 371 bevorzugt ein Permanentmagnet ist oder diesen umfasst und die jeweils erste Komponente 372 bzw. 382 eine elektromagnetische Schaltung umfasst, die bei Annäherung des Permanentmagneten ein Signal ausgeben kann, sobald dieser einen Mindestabstand zu der ersten Komponente unterschreitet. Solche Magnetschaltungen sind aus dem Stand der Technik grundsätzlich bekannt. Dabei kann bevorzugt sein, dass der erste Schutzschalter bzw. zweite Schutzschalter ein Signal ausgibt, wenn sich der Abstand der ersten Komponente und der zweiten Komponente des jeweiligen Schutzschalters aus der Schutzposition heraus um mehr als 3mm oder um mehr als 5mm oder um mehr als 10mm verändert, sodass dieses Signal anzeigt, dass ein Bewegen des jeweiligen Schutzelements aus der Schutzposition heraus erfolgte.

Alternativ kann auch vorgesehen sein, dass die jeweiligen Schutzschalter permanent (beispielsweise in zeitlichen Abständen von wenigen Millisekunden) ein Signal ausgeben, wobei das Signal entweder angibt, dass sich das jeweilige Schutzelement in der Schutzposition befindet oder dass sich das jeweilige Schutzelement nicht in der Schutzposition befindet. Die betreffenden Signale können an die bereits beschriebene Steuereinheit 180 übermittelt werden. Diese kann abhängig davon, ob sich die Schutzelemente in der Schutzposition befinden, den Betrieb der Verpackungsmaschine freigeben oder diesen unterbrechen bzw. blockieren. So kann insbesondere vorgesehen sein, dass die Steuereinheit 180 den Betrieb der Verpackungsmaschine nur dann freigibt, wenn sowohl das erste Schutzelement als auch das zweite Schutzelement in der Schutzposition befinden.

Wie in der Figur 2 dargestellt, können die Schutzschalter 370 und 380 auf gegenüberliegenden Seiten des ersten Schutzelements und des zweiten Schutzelements gesehen in Transportrichtung T angeordnet sein. So kann bspw. (wie in Figur 2 dargestellt) der zweite Schutzschalter in Transportrichtung T rechts oder links an einer Seitenfläche des zweiten Schutzelements angeordnet sein und der erste Schutzschalter 380 in Transportrichtung T gesehen links oder rechts an einer Seitenfläche 383 des ersten Schutzelements angeordnet sein. Hierdurch wird sichergestellt, dass selbst bei einem Verkippen (also Drehung) der Schutzeinrichtung um die Transportrichtung T zuverlässig festgestellt werden kann, ob beide Schutzelemente 251 und 252 in der Schutzposition positioniert sind. Hierdurch wird die Anzahl der notwendigen Schutzschalter zum Detektieren der korrekten Positionierung aller Elemente der Schutzeinrichtung in der Schutzposition reduziert und für jedes der Schutzelemente ist nur ein, bevorzugt genau ein Schutzschalter erforderlich.

Diese Ausgestaltung kann auch auf Schutzeinrichtungen erweitert werden, die mehr als die zwei hier beschriebenen Schutzelemente (insbesondere drei oder vier Schutzelemente) umfassen, wobei bevorzugt wenigstens eines der Schutzelemente eine Länge aufweist, die geringer ist als die Länge jedes anderen Schutzelements und dieses Schutzelement gesehen in Transportrichtung T entweder das erste Schutzelement (bei Ausgestaltung des Durchlasses als Einlass) oder das letzte Schutzelement (bei Ausgestaltung des Durchlasses als Auslass) vorgesehen ist. Hierdurch kann bereits bei einem Eingreifen eines Bedieners in das jeweils erste bzw. letzte Schutzelement zuverlässig festgestellt werden, dass ein Bediener Gefahr läuft, in den Arbeitsbereich 110 einzugreifen. Aufgrund der mit der geringen Länge einhergehenden geringen Masse des jeweiligen Schutzelements wird beim Eingreifen des Bedieners gleichzeitig die Verletzungsgefahr reduziert und die notwendige Kraft, um den Schutzschalter auszulösen (also ein Signal zu erzeugen, das anzeigt, dass das betreffende Schutzelement nicht in der Schutzposition angeordnet ist), reduziert, was Verletzungsrisiken minimiert.

Figur 4 zeigt eine Seitenansicht einer Schutzeinrichtung 250 gemäß einer Ausführungsform. Diese kann mit der bisher beschriebenen Ausführung der Schutzeinrichtung (siehe insbesondere Figur 2 und Figur 3) kombiniert werden.

In der hier dargestellten Seitenansicht ist gezeigt, dass das erste Schutzelement 251 über ein erstes Verbindungselement 463 verfügt und das zweite Schutzelement 252 über ein dazu korrespondierendes zweites Verbindungselement 464 verfügt, sodass das erste Schutzelement und das zweite Schutzelement miteinander verbunden werden können. Bei dieser Verbindung handelt es sich bevorzugt um eine lösbare Verbindung, die insbesondere werkzeuglos gelöst und/oder hergestellt werden kann. Die Verbindung ist bevorzugt so vorgesehen, dass sie zerstörungsfrei gelöst werden kann, also insbesondere keine Beschädigung oder Unbrauchbarmachung der Verbindungselemente 463 und 464 erforderlich ist, um die Verbindung zu lösen.

Die Verbindungselemente 463 und 464 sind bevorzugt so ausgestaltet, dass sie eine Drehung des ersten Schutzelements 251 und des zweiten Schutzelements 252 relativ zueinander um die Drehachse R (siehe die Ausführungsformen entsprechend der Figuren 2 und 3) ermöglichen. Dabei kann ferner vorgesehen sein, dass die Verbindungselemente 463 und 464 so ausgestaltet sind, dass im verbundenen Zustand des ersten Schutzelements und des zweiten Schutzelements eine translatorische Bewegung (also eine im Wesentlichen geradlinige Bewegung) entlang einer zur Transportrichtung T parallelen Richtung h möglich ist. Diese translatorische Bewegung entlang der Richtung h kann insbesondere genutzt werden, um ein Lösen der Verbindung zwischen dem ersten Schutzelement 251 und dem zweiten Schutzelement 252 zu bewirken. Dabei kann bevorzugt vorgesehen sein, dass bei einer Bewegung des zweiten Schutzelements 252 von dem ersten Schutzelement 251 weg der Schutzschalter 370 ausgelöst wird, da die Komponenten 371 und 372 des Schutzschalters entlang der Richtung h voneinander wegbewegt werden, das zweite Schutzelement also aus der Schutzposition herausbewegt wird. Insbesondere kann vorgesehen sein, dass der Schutzschalter 370 ausgelöst wird (also ein Signal ausgibt, das indikativ für die Bewegung des zweiten Schutzelements 252 aus der Schutzposition heraus ist), bevor die Verbindung zwischen dem ersten Schutzelement und dem zweiten Schutzelement vollständig gelöst ist (das zweite Schutzelement 252 also keiner Bewegungseinschränkung durch die Verbindungselemente 463 und 464 mehr unterliegt, insbesondere kein physischer Kontakt mehr mit dem ersten Schutzelement 251 vorliegt). Ist zum Lösen der Verbindung beispielsweise eine Bewegung des zweiten Schutzelements um 40mm weg vom ersten Schutzelement erforderlich, kann vorgesehen sein, dass der erste Schutzschalter bereits bei einem Bewegen des zweiten Schutzelements um 10mm oder um 15mm auslöst.

Alternativ oder zusätzlich kann vorgesehen sein, dass die Verbindungselemente 463 und 464 so ausgestaltet sind, dass eine Bewegung des zweiten Schutzelements 252 relativ zum ersten Schutzelement 251 in einer Richtung v senkrecht zur Transportrichtung T und insbesondere senkrecht zu einer Transportebene, in der das Verpackungsmaterial transportiert wird, nicht möglich ist bzw. durch die Verbindungselemente 463 und 464 verhindert wird. Damit wird realisiert, dass das zweite Schutzelement 252 nur entweder in Transportrichtung oder gegen die Transportrichtung relativ zum ersten Schutzelement 251 bewegt werden kann oder gegen dieses um die Drehachse R verdreht werden kann.

Es kann vorgesehen sein, dass ein maximaler Drehwinkel α, um den das zweite Schutzelement 252 relativ zum ersten Schutzelement 251 um die Drehachse R gedreht werden kann, durch die Konstruktion des ersten und zweiten Schutzelements und/oder der Verbindungselemente 463 und 464 begrenzt wird und beispielsweise kleiner als 45° oder kleiner als 25° ist. Es kann ferner vorgesehen sein, dass der maximale Drehwinkel α größer ist, als ein Grenzwinkel β, um den das Schutzelement 252 aus der Schutzposition (wie hier in Figur 4 dargestellt) verdreht werden kann, ohne dass der Schutzschalter 370 ein entsprechendes Signal ausgibt. Selbiges gilt auch für ein Drehen des ersten Schutzelements 251 relativ zum zweiten Schutzelement 252. Dabei kann vorgesehen sein, dass der Grenzwinkel β einem Anheben des zweiten Schutzelements 252 aufgrund des Verdrehens um die Drehachse R von höchstens 5mm oder höchstens 10mm entspricht.

In der Figur 4 sind ebenfalls ein Griff 461 und ein Griff 462 gezeigt, die jeweils auf einer von der Transportebene wegweisenden Seite des ersten Schutzelements 251 bzw. des zweiten Schutzelements 252 angeordnet sein können. Es kann dabei vorgesehen sein, dass nur ein Griff 461 oder 462 vorgesehen ist oder beide Griffe 461 und 462. Die Griffe erlauben ein Greifen jedes der Schutzelemente 251 und 252, wobei durch entsprechende Ausgestaltung der Verbindungselemente 463 und 464 gewährleistet sein kann, dass ein Anheben des ersten Schutzelements und des zweiten Schutzelements nur gleichzeitig und gemeinsam möglich ist, indem eine relative Bewegung der Schutzelemente 251 und 251 zueinander entlang der Richtung v durch die Zusammenwirkung der Verbindungselemente 463 und 464 vermieden wird.

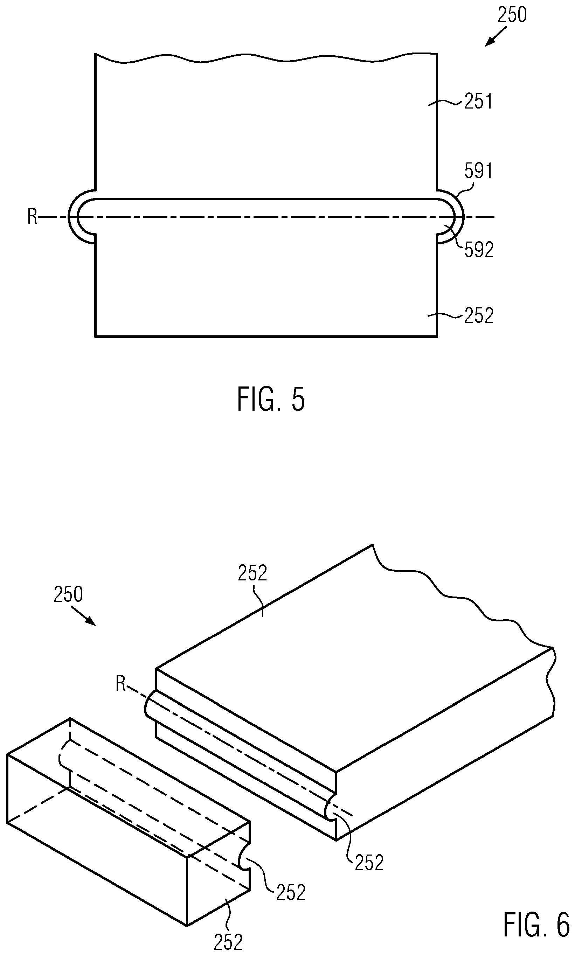

Die Figur 5 zeigt eine Draufsicht auf eine Schutzeinrichtung 250 und das erste Schutzelement 251 und das zweite Schutzelement 252.

In der hier gezeigten Ausführungsform ist das erste Verbindungselement 591, das Teil des ersten Schutzelements 251 ist, als Aufnahme, und das zweite Verbindungselement 592 des zweiten Schutzelements 252 als Eingriffselement 592 an jeweils gegenüberliegenden Seiten des ersten Schutzelements 251 und des zweiten Schutzelements 252 ausgestaltet. Auch die umgekehrte Ausgestaltung ist denkbar. Die Verbindungselemente 591 und 592 sind, wie bereits im Zusammenhang mit der Figur 4 beschrieben, so angeordnet und ausgestaltet, dass sie ein Drehen des zweiten Schutzelements 252 um die Drehachse R relativ zum ersten Schutzelement 251 ermöglichen. So kann das erste Verbindungselement 591 in der hier gezeigten Ausführungsform bspw. als Halbkugelschale und das zweite Verbindungselement 592 als dazu korrespondierende Halbkugel mit gleichem oder geringfügig kleinerem (beispielsweise 0,5mm oder 1mm kleiner) Radius ausgestaltet sein, sodass das zweite Verbindungselement 592 in das erste Verbindungselement 591 eingreifen kann. Hierdurch wird eine Selbstzentrierung hinsichtlich der relativen Positionierung des ersten Schutzelements und des zweiten Schutzelements erreicht und gleichzeitig bewirkt, dass nur ein Verdrehen des zweiten Schutzelements relativ zum ersten Schutzelement möglich ist.

Figur 6 zeigt eine weitere Ausführungsform der Schutzeinrichtung 250. In der hier dargestellten Ausführungsform ist das erste Verbindungselement 593 des ersten Schutzelements 251 als Ausbuchtung in einer zum zweiten Schutzelement 252 weisenden Oberfläche ausgestaltet. Insbesondere kann die äußere Form der Ausbuchtung 593 die Form eines Zylindermantels oder Zylindermantelsegments aufweisen, dessen Symmetrieachse mit der Rotationsachse R zusammenfallen kann.

Das zweite Schutzelement 252 umfasst in dieser Ausführungsform ein dazu korrespondierendes zweites Verbindungselement 594, das als Einkerbung mit einer im Wesentlichen zylindrischen Oberfläche ausgestaltet sein kann, wobei der Radius der zylindrischen Oberfläche gleich oder geringfügig größer als der Radius der zylindrischen Oberfläche des ersten Verbindungselements 593 ausgestaltet sein kann, der von der zylindrischen Oberfläche der Einkerbung eingenommene Teil relativ zu einem Vollzylinder jedoch kleiner ist als der des ersten Verbindungselements. Insbesondere kann die zylindrische Oberfläche des zweiten Verbindungselements sich über einen Winkel γ erstrecken, der kleiner ist als der Winkel δ, über den sich die zylindrische Oberfläche des ersten Verbindungselements 593 erstreckt (jeweils gesehen in einer Ebene senkrecht zur Längsachse der gedachten Zylinder, die der jeweiligen zylindrischen Oberfläche zugeordnet sind und gemessen bezüglich der Symmetrieachse der jeweiligen gedachten Zylinder). Hierdurch sind das erste Schutzelement und das zweite Schutzelement geringfügig zueinander beabstandet und können gegeneinander verdreht werden, wobei ein maximaler Drehwinkel, um den das erste Schutzelement und das zweite Schutzelement gegeneinander verdreht werden können, durch die Winkel γ und δ definiert ist.

Auch in dieser Ausführungsform wird erreicht, dass bei Verbindung des ersten Schutzelements und zweiten Schutzelements gewährleistet wird, dass das erste Schutzelement und das zweite Schutzelement korrekt relativ zueinander positioniert sind und ein Drehen des zweiten Schutzelements 252 um die Drehachse R ermöglicht wird. Mit dieser Ausführungsform wird gleichzeitig erreicht, dass eine translatorische Bewegung des ersten und zweiten Schutzelements relativ zueinander (siehe insbesondere die Ausführungsformen zur Figur 4) entlang der Transportrichtung möglich ist, aber eine translatorische Bewegung des zweiten Schutzelements 252 relativ zum ersten Schutzelement 251 entlang einer vertikalen Richtung senkrecht zur Transportebene vermieden bzw. unterbunden wird.

## Patentansprüche

1. Verpackungsmaschine (100) zum Verarbeiten von Verpackungsmaterial (130), die Verpackungsmaschine (100) umfassend einen Arbeitsbereich (110), einen Durchlass (111, 112) für Verpackungsmaterial (130) und eine Schutzeinrichtung (250), die im Bereich des Durchlasses (111, 112) so angeordnet ist, dass ein Eingreifen in den Arbeitsbereich (110) durch den Durchlass (111, 112) verhindert wird, wobei die Schutzeinrichtung (250) ein erstes Schutzelement (251), einen dem ersten Schutzelement zugeordneten ersten Schutzschalter (380) umfasst,
**dadurch gekennzeichnet, dass** die Schutzeinrichtung (250) ferner ein zweites Schutzelement (252) und einen dem zweiten Schutzelement zugeordneten zweiten Schutzschalter (370) umfasst, wobei das zweite Schutzelement (252) in einer Transportrichtung (T) von Verpackungsmaterial (130) eine zweite Länge (L2) aufweist, die kleiner als eine erste Länge (L1) des ersten Schutzelements (251) in der Transportrichtung (T) ist, und wobei das erste Schutzelement (251) und das zweite Schutzelement (252) miteinander verbunden sind und um eine Drehachse (R), die in einer Ebene senkrecht zur Transportrichtung (T) und in einer Ebene parallel zu einer Transportebene verläuft, relativ zueinander drehbar angeordnet sind.

2. Verpackungsmaschine (100) nach Anspruch 1, wobei der Durchlass (111) ein Einlass für Verpackungsmaterial (130) ist, durch den Verpackungsmaterial dem Arbeitsbereich (110) zugeführt werden kann, und wobei das zweite Schutzelement (252) stromauf des ersten Schutzelements (251) angeordnet ist; oder
wobei der Durchlass (112) ein Auslass für Verpackungsmaterial (130) ist, durch den Verpackungsmaterial aus dem Arbeitsbereich (110) abgeführt werden kann, und wobei das zweite Schutzelement (252) stromab des ersten Schutzelements (251) angeordnet ist.

3. Verpackungsmaschine (100) nach Anspruch 1 oder 2, wobei der erste Schutzschalter (380) mit einer ersten Seite (383) des ersten Schutzelements (251) wirkverbunden ist und wobei der zweite Schutzschalter (370) mit einer zweiten Seite (373) des zweiten Schutzelements (252) wirkverbunden ist, wobei die erste Seite (383) und die zweite Seite (373) einander gegenüberliegen.

4. Verpackungsmaschine (100) nach einem der Ansprüche 1 bis 3, wobei der erste Schutzschalter (380) und/oder der zweite Schutzschalter (370) als Magnetschalter ausgebildet sind.

5. Verpackungsmaschine (100) nach einem der Ansprüche 1 bis 4, wobei die zweite Länge (L2) kleiner als 50% oder kleiner als 30% oder kleiner als 25% der ersten Länge (L1) ist.

6. Verpackungsmaschine (100) nach einem der Ansprüche 1 bis 5, wobei das erste Schutzelement (252) und das zweite Schutzelement (251) lösbar miteinander verbunden sind.

7. Verpackungsmaschine (100) nach einem der Ansprüche 1 bis 6, wobei das erste Schutzelement (251) und das zweite Schutzelement (251) derart miteinander verbunden sind, dass eine translatorische Bewegung des zweiten Schutzelements (252) relativ zum ersten Schutzelement parallel zur Transportrichtung (T) möglich ist und/oder eine translatorische Bewegung des zweiten Schutzelements (252) relativ zum ersten Schutzelement (251) in einer Richtung (v) senkrecht zur Transportrichtung (T) nicht möglich ist.

8. Verpackungsmaschine (100) nach einem der Ansprüche 1 bis 7, wobei die Masse des zweiten Schutzelements (252) kleiner ist als die Masse des ersten Schutzelements (251).

9. Verpackungsmaschine (100) nach einem der Ansprüche 1 bis 8, wobei das zweite Schutzelement (252) relativ zu dem ersten Schutzelement (251) um einen Drehwinkel (α) aus einer Schutzposition heraus um die Drehachse (R) gedreht werden kann, der größer ist als ein Grenzwinkel (β), bei dessen Überschreiten der zweite Schutzschalter (370) eine Bewegung des zweiten Schutzelements (252) aus der Schutzposition signalisiert.

10. Verpackungsmaschine (100) nach einem der Ansprüche 1 bis 9, wobei die Verpackungsmaschine (100) eine Siegelmaschine ist oder eine Siegelmaschine umfasst.

11. Verpackungsmaschine (100) nach einem der Ansprüche 1 bis 10, wobei das erste Schutzelement (251) und/oder das zweite Schutzelement (252) einen Griff (461, 462) umfasst, mit dem das erste Schutzelement (251) und/oder das zweite Schutzelement (252) in einer Richtung (v) senkrecht zu einer Transportebene angehoben werden kann.

12. Verpackungsmaschine (100) nach Anspruch 11, wobei das erste Schutzelement (251) und das zweite Schutzelement (252) so miteinander verbunden sind, dass sie nur gemeinsam angehoben werden können.

13. Verpackungsmaschine (100) nach einem der Ansprüche 1 bis 12, wobei ein Drehen des zweiten Schutzelements (252) aus einer Schutzposition um die Drehachse (R) eine Kraft von höchstens 50N erfordert.

14. Verfahren zum Verarbeiten von Verpackungsmaterial (130) mit einer Verpackungsmaschine (100) gemäß einem der Ansprüche 1 bis 13, das Verfahren umfassend ein Verarbeiten von Verpackungsmaterial (130) mit der Verpackungsmaschine (100), wenn der erste Schutzschalter (380) und der zweite Schutzschalter (370) signalisieren, dass das erste Schutzelement (251) und das zweite Schutzelement (252) in eine Schutzposition verbracht sind, und ein Blockieren der Verarbeitung von Verpackungsmaterial (130), wenn der erste Schutzschalter (380) und/oder der zweite Schutzschalter (370) signalisiert, dass das erste Schutzelement (251) und/oder das zweite Schutzelement (252) nicht in die Schutzposition verbracht sind.

## Claims

1. A packaging machine (100) for processing packaging material (130), the packaging machine (100) comprising a working area (110), a passage (111, 112) for packaging material (130) and a protective device (250) which is arranged in the region of the passage (111, 112) in such a way that reaching in the working area (110) through the passage (111, 112) is prevented, the protective device (250) comprising a first protective element (251), a first protective switch (380) assigned to the first protective element, **characterised in that** the protective device (250) further comprises a second protective element (252) and a second protective switch (370) assigned to the second protective element, wherein the second protective element (252) has a second length (L2) in a transport direction (T) of packaging material (130) which is smaller than a first length (L1) of the first protective element (251) in the transport direction (T), and wherein the first protective element (251) and the second protective element (252) are connected to one another and are arranged so as to be rotatable relative to one another about an axis of rotation (R) which extends in a plane perpendicular to the transport direction (T) and in a plane parallel to a transport plane.

2. The packaging machine (100) according to claim 1, wherein the passage (111) is an inlet for packaging material (130) through which packaging material can be fed to the working area (110), and wherein the second protective element (252) is arranged upstream of the first protective element (251); or
wherein the passage (112) is an outlet for packaging material (130), through which packaging material can be discharged from the working area (110), and wherein the second protective element (252) is arranged downstream of the first protective element (251).

3. The packaging machine (100) according to claim 1 or 2, wherein the first safety switch (380) is operatively connected to a first side (383) of the first protective element (251) and wherein the second safety switch (370) is operatively connected to a second side (373) of the second protective element (252), wherein the first side (383) and the second side (373) are opposite each other.

4. The packaging machine (100) according to any of claims 1 to 3, wherein the first safety switch (380) and/or the second safety switch (370) are configured as solenoids.

5. The packaging machine (100) according to any of claims 1 to 4, wherein the second length (L2) is smaller than 50 % or smaller than 30 % or smaller than 25 % of the first length (L1).

6. The packaging machine (100) according to any of claims 1 to 5, wherein the first protective element (252) and the second protective element (251) are detachably connected to each other.

7. The packaging machine (100) according to any of claims 1 to 6, wherein the first protective element (251) and the second protective element (251) are connected to each other in such a way that a translational movement of the second protective element (252) relative to the first protective element parallel to the transport direction (T) is possible and/or a translational movement of the second protective element (252) relative to the first protective element (251) in a direction (v) perpendicular to the transport direction (T) is not possible.

8. The packaging machine (100) according to any of claims 1 to 7, wherein the mass of the second protective element (252) is smaller than the mass of the first protective element (251).

9. The packaging machine (100) according to any of claims 1 to 8, wherein the second protective element (252) can be rotated relative to the first protective element (251) by an angle of rotation (a) out of a protective position about the axis of rotation (R) which is greater than a critical angle (β), above which the second protective switch (370) signals a movement of the second protective element (252) out of the protective position.

10. The packaging machine (100) according to any of claims 1 to 9, wherein the packaging machine (100) is a sealing machine or comprises a sealing machine.

11. The packaging machine (100) according to any of claims 1 to 10, wherein the first protective element (251) and/or the second protective element (252) comprises a handle (461, 462) with which the first protective element (251) and/or the second protective element (252) can be lifted in a direction (v) perpendicular to a transport plane.

12. The packaging machine (100) according to claim 11, wherein the first protective element (251) and the second protective element (252) are connected to each other in such a way that they can only be lifted together.

13. The packaging machine (100) according to any of claims 1 to 12, wherein a rotation of the second protective element (252) from a protective position about the rotation axis (R) requires a force of at most 50 N.

14. A method of processing packaging material (130) with a packaging machine (100) according to any of claims 1 to 13, the method comprising processing packaging material (130) with the packaging machine (100) when the first safety switch (380) and the second safety switch (370) signal that the first protective element (251) and the second protective element (252) are moved to a protective position, and blocking the processing of packaging material (130) when the first protective switch (380) and/or the second protective switch (370) signals that the first protective element (251) and/or the second protective element (252) are not moved to the protective position.

## Revendications

1. Machine d'emballage (100) pour traiter un matériau d'emballage (130), la machine d'emballage (100) comprenant une zone de travail (110), un passage (111, 112) pour le matériau d'emballage (130) et un dispositif de protection (250) qui est disposé dans la zone du passage (111, 112) de telle sorte qu'un engagement dans la zone de travail (110) par le passage (111, 112) est empêché, le dispositif de protection (250) comprenant un premier élément de protection (251), un premier interrupteur de protection (380) associé au premier élément de protection,
**caractérisé en ce que** le dispositif de protection (250) comprend en outre un deuxième élément de protection (252) et un deuxième interrupteur de protection (370) associé au deuxième élément de protection, le deuxième élément de protection (252) ayant, dans une direction de transport (T) de matériau d'emballage (130), une deuxième longueur (L2), qui est inférieure à une première longueur (L1) du premier élément de protection (251) dans la direction de transport (T), et dans lequel le premier élément de protection (251) et le deuxième élément de protection (252) sont connectés entre eux et sont disposés de manière à pouvoir tourner l'un par rapport à l'autre autour d'un axe de rotation (R) qui s'étend dans un plan perpendiculaire à la direction de transport (T) et dans un plan parallèle à un plan de transport.

2. Machine d'emballage (100) selon la revendication 1, dans laquelle le passage (111) est une entrée pour le matériau d'emballage (130) à travers laquelle le matériau d'emballage peut être alimenté vers la zone de travail (110), et dans laquelle le deuxième élément de protection (252) est disposé en amont du premier élément de protection (251) ; ou
dans laquelle le passage (112) est une sortie pour le matériau d'emballage (130), à travers laquelle le matériau d'emballage peut être évacué de la zone de travail (110), et dans lequel le deuxième élément de protection (252) est disposé en aval du premier élément de protection (251).

3. Machine d'emballage (100) selon la revendication 1 ou 2, dans laquelle le premier interrupteur de protection (380) est relié fonctionnellement à un premier côté (383) du premier élément de protection (251) et dans laquelle le deuxième interrupteur de protection (370) est relié fonctionnellement à un deuxième côté (373) du deuxième élément de protection (252), le premier côté (383) et le deuxième côté (373) se faisant face.

4. Machine d'emballage (100) selon l'une des revendications 1 à 3, dans laquelle le premier interrupteur de protection (380) et/ou le deuxième interrupteur de protection (370) sont conçus comme des interrupteurs magnétiques.

5. Machine d'emballage (100) selon l'une des revendications 1 à 4, dans laquelle la deuxième longueur (L2) est inférieure à 50 % ou inférieure à 30 % ou inférieure à 25 % de la première longueur (L1).

6. Machine d'emballage (100) selon l'une des revendications 1 à 5, dans laquelle le premier élément de protection (252) et le deuxième élément de protection (251) sont connectés entre eux de manière amovible.

7. Machine d'emballage (100) selon l'une des revendications 1 à 6, dans laquelle le premier élément de protection (251) et le deuxième élément de protection (251) sont connectés entre eux de telle sorte qu'un mouvement de translation du deuxième élément de protection (252) par rapport au premier élément de protection est possible parallèlement à la direction de transport (T) et/ou qu'un mouvement de translation du deuxième élément de protection (252) par rapport au premier élément de protection (251) dans une direction (v) perpendiculaire à la direction de transport (T) n'est pas possible.

8. Machine d'emballage (100) selon l'une des revendications 1 à 7, dans laquelle la masse du deuxième élément de protection (252) est inférieure à la masse du premier élément de protection (251).

9. Machine d'emballage (100) selon l'une des revendications 1 à 8, dans laquelle le deuxième élément de protection (252) peut être tourné par rapport au premier élément de protection (251) d'un angle de rotation (α) autour de l'axe de rotation (R) à partir d'une position de protection, qui est supérieur à un angle limite (β), au-delà duquel le deuxième interrupteur de protection (370) signale un mouvement du deuxième élément de protection (252) à partir de la position de protection.

10. Machine d'emballage (100) selon l'une des revendications 1 à 9, dans laquelle la machine d'emballage (100) est une machine de scellage ou comprend une machine de scellage.

11. Machine d'emballage (100) selon l'une des revendications 1 à 10, dans laquelle le premier élément de protection (251) et/ou le deuxième élément de protection (252) comprend une poignée (461, 462) permettant de soulever le premier élément de protection (251) et/ou le deuxième élément de protection (252) dans une direction (v) perpendiculaire à un plan de transport.

12. Machine d'emballage (100) selon la revendication 11, dans laquelle le premier élément de protection (251) et le deuxième élément de protection (252) sont connectés entre eux de telle sorte qu'ils ne peuvent être soulevés qu'ensemble.

13. Machine d'emballage (100) selon l'une des revendications 1 à 12, dans laquelle une rotation du deuxième élément de protection (252) autour de l'axe de rotation (R) à partir d'une position de protection nécessite une force d'au plus 50 N.

14. Procédé de traitement de matériau d'emballage (130) avec une machine d'emballage (100) selon l'une des revendications 1 à 13, le procédé comprenant un traitement de matériau d'emballage (130) avec la machine d'emballage (100) lorsque le premier interrupteur de protection (380) et le deuxième interrupteur de protection (370) signalent, que le premier élément de protection (251) et le deuxième élément de protection (252) sont placés dans une position de protection, et un blocage du traitement du matériau d'emballage (130) lorsque le premier interrupteur de protection (380) et/ou le deuxième interrupteur de protection (370) signalent que le premier élément de protection (251) et/ou le deuxième élément de protection (252) ne sont pas placés dans la position de protection.
